# EUROPÄISCHE PATENTANMELDUNG

(11) **EP 1 398 598 A1**
(43) Veröffentlichungstag der Anmeldung: **17.03.2004**
(21) Anmeldenummer: 02020759.3
(22) Anmeldetag: 16.09.2002
(51) Int. Cl.: G01B 11/25, B23Q 17/09, B23Q 17/24, G01N 3/58

(54) **Verfahren und Vorrichtung zum Messen von kleinen Schneidkantengeometrien**

(71) Anmelder: WENDT GmbH, D-40670 Meerbusch (DE)
(72) Erfinder: Lamers, Norbert, 47445 Moers (DE)
(74) Vertreter: DR. STARK & PARTNER

(57) **Zusammenfassung**

Die Erfindung betrifft ein Verfahren und eine Vorrichtung zum Messen von kleinen, in einem Winkel zur Schneidkantenlängserstreckung ausgerichteten Schneidkantengeometrien eines Zerspanwerkzeuges, insbesondere einer Wendeschneidplatte. Um ein Verfahren und eine Vorrichtung zur einfachen Bestimmung der Schneidkantengeometrie eines Zerspanwerkzeuges zu schaffen, soll die Messung mittels eines Linenlasers, einer Bilderfassung sowie einer Auswerteeinrichtung erfolgen.

## Beschreibung

Die Erfindung betrifft ein Verfahren zum Messen von kleinen, in einem Winkel zur Schneidkantenlängserstreckung ausgerichteten Schneidkantengeometrien eines Zerspanwerkzeuges, insbesondere einer Wendeschneidplatte.

Aus der Praxis sind derartige Verfahren bekannt, die bei Messaufgaben an kleinen Profilgeometrien von ca. 10 bis 100 µm eingesetzt werden. So werden z. B. bei der Herstellung von insbesondere als Wendeschneidplatten ausgebildeten Zerspanwerkzeugen die Schneiden häufig durch Bürsten, Sandstrahlen oder dergleichen verrundet, um somit eine höhere Stabilität zu erreichen.

Die exakte Bestimmung des Verrundungsradius der Schneide ist bei der Herstellung von Zerspanwerkzeugen von sehr großer Bedeutung, da generell die Stabilität der Schneide und die erzielbare Oberflächengüte des mittels des Zerspanwerkzeuges zu bearbeitenden Werkstückes mit höherem Verrundungsradius zunehmen.

Dabei erfolgt die Bestimmung der Profilgeometrie bzw. des Verrundungsradius üblicherweise im Tastschnittverfahren, bei dem die Profilgeometrie mit einer Tastnadel abgefahren und die Nadelauslenkung dann in ein elektrisches Signal umgesetzt wird. Anschließend wird das elektrische Signal ausgedruckt oder ausgeplottet und die Größe des Verrundungsradius mittels einer Schablone mit verschiedenen Radiengrößen ermittelt. Dabei wird meistens manuell überprüft, welcher Schablonenradius mit dem gemessenen Profil deckungsgleich ist.

Nachteilig hierbei ist, dass es beim Tastschnittverfahren leicht zu Beschädigungen der Tastnadel kommen kann, was Verfälschungen des Messergebnisses verursacht. Auch kann das vermessene Profil beschädigt werden, was einen entsprechenden Ausschuss verursacht und nur eine stichprobenartige Überprüfung der Zerspanwerkzeuge erlaubt. Zudem ist die Ausrichtung des Profils sehr aufwändig und die Bestimmung des Rundungsradius durch Schablonen ist umständlich und zeitintensiv. Letztendlich lässt sich das Tastschnittverfahren trotz mittlerweile verbreiteter PC-basierter Tastschnittmessverfahren nur bedingt automatisieren und eine Messung in der Bearbeitungsmaschine bei montiertem Zerspanungswerkzeug ist kaum möglich.

Weiterhin sind auch Messverfahren bekannt, bei denen eine Projektion der zu vermessenden Geometrie erfasst und ausgewertet wird. Nachteilig hierbei ist, dass die Projektion parallel zur Längserstreckung des Profils, d.h. zur Schneidkantenlängserstreckung erfolgen muss und somit die projizierte Kurve lediglich die überlagerte Gesamtheit aller Maximalgeometrien darstellt; die Profilgeometrie an einer einzelnen Stelle lässt sich somit nicht gezielt erfassen.

Aufgabe der Erfindung ist es, die vorgenannten Nachteile zu vermeiden und ein Verfahren der eingangs genannten Art anzugeben, mit dem in einfacher und sicherer Art und Weise eine genaue Bestimmung der Schneidkantengeometrie eines Zerspanwerkzeuges möglich ist.

Diese Aufgabe wird gelöst durch ein Verfahren zum Messen von kleinen, in einem Winkel zur Schneidkantenlängserstreckung ausgerichteten Schneidkantengeometrien eines Zerspanwerkzeuges, insbesondere einer Wendeschneidplatte, wobei die Messung mittels eines Linienlasers, einer Bilderfassung sowie einer Auswerteeinrichtung erfolgt,
der Linienlaser mit seinem streifenförmigen Laserstrahl auf den zu messenden Bereich der Schneidkantengeometrie gerichtet ist und auf diesen Bereich auftrifft,
der Laserstrahl in seiner Ausrichtung durch die Laserstrahlbreite und die Laserstrahllängserstreckung charakterisiert ist,
die Bilderfassung das durch den Bereich der zu messenden Schneidkantengeometrie diffus reflektierte Licht erfasst und die entsprechenden Bildsignale an die Auswerteeinrichtung zur Auswertung weiterleitet,
die Laserstrahlbreite in einem ersten Winkel α zur Schneidkantenlängserstreckung ausgerichtet ist,
die Laserstrahllängserstreckung in einem zweiten, weder parallelen noch orthogonalen Winkel β zur Schneidkantenlängserstreckung ausgerichtet ist und
die relative Ausrichtung von Linienlaser und Bilderfassung zumindest bekannt ist und diese relative Ausrichtung von der Auswerteeinrichtung bei der Auswertung der erfassten Bildsignale berücksichtigt wird. Hierdurch werden die Profilgeometrien berührungslos und somit garantiert zerstörungsfrei erfasst. Beschädigungen der Schneidkante werden sicher vermieden und es ist kein das Messergebnis eventuell verfälschender Verschleiß, z. B. der Tastnadel oder dergleichen gegeben. Durch die Kenntnis der Ausrichtung vom Linienlaser zum Zerspanwerkzeug und der relativen Ausrichtung vom Linienlaser zur Bilderfassung ist auch die Ausrichtung von der Bilderfassung zum Zerspanwerkzeug bekannt; die jeweilige Positon, d.h. der Abstand des Linienlasers bzw. der Bilderfassung vom Zerspanwerkzeuges auf der entsprechenden Ausrichtungsache ist dabei nur insofern von Bedeutung, als das der Fokus des Lasers bzw. der Bilderfassung hiervon berührt wird und durch entsprechende Veränderung des Abstandes eingstellt werden kann.

Durch die berührungslose Vermessung kann dieses Verfahren automatisiert und/oder mit entsprechend ausgebildeten Vorrichtungen in Bearbeitungsmaschinen integriert werden.

Vorzugsweise kann die relative Ausrichtung von Linienlaser und Bilderfassung zueinander derart vorgesehen sein, dass die Bilderfassung ausschließlich durch die Profilgeometrie diffus reflektiertes Licht erfasst, so dass nicht nur ein Lichtpunkt als Reflektion des gerichtet reflektierten Lichtes erfasst wird, was keine Aussage über die Profilgeometrie ermöglichen würde.

Vorzugsweise kann die Bilderfassung in der durch die Schneidkantenlängserstreckung und die Linienlaserlängserstreckung aufgespannte Ebene in orthogonaler Richtung zur Schneidkantenlängserstreckung erfolgen, so dass das Abbild der Laserprojektion auf der Schneidkante verzerrungsfrei von der insbesondere als CCD-Kamera ausgebildeten Bilderfassung aufgenommen werden kann.

Erfindungsgemäß kann der Winkel β zwischen 30° und 60°, insbesondere 45° betragen, so dass die zu kompensierenden Verzerrungen der Projektion aufgrund der schrägen Ausrichtung der Laserprojektion in Bezug auf die Schneidkante relativ gering ausfallen und einfach kompensiert werden können.

Vorteilhafterweise kann die Auswertung der erfassten Bildsignale durch Überlagerung und Vergleich mit vorbekannten Hilfsgeometrien erfolgen, so dass in die erfasste Kurve der Laserstrahlreflektion verschiedene Geometrien so lange eingepasst werden, bis eine entsprechende ideale Übereinstimmung aufgefunden worden ist. Dies kann vorzugsweise durch eine Bildverarbeitungssoftware erfolgen, die beispielsweise nach der Methode der kleinsten Fehlerquadrate auswerten kann.

Zur Erfassung von Zerspanwerkzeugen mit nicht diffus reflektierenden Oberflächen kann eine Oberflächenanpassung durch Aufbringen einer diffus reflektierenden sehr dünnen Schicht erfolgen, wobei die Oberflächenanpassung durch das Aufbringen einer Lackierung oder einer anderen, insbesondere rückstands- und beschädigungsfrei entfernbaren Beschichtung oder aber durch Verursachen einer Kondensatschicht mittels gezielter Kühlung des Zerspanwerkezuges erfolgen kann. Dabei muss die Beschichtung deutlich dünner sein als die mittels der Vermessung zu erfassende Größenordnung der Profilgeometrie der Zerspanwerkzeuges, so dass keine Verfälschung des Messergebnisses durch die Oberflächenanpassung verursacht wird.

Die Erfindung betrifft weiterhin eine Vorrichtung zur Messung von kleinen, in einem Winkel zur Schneidkantenlängserstreckung ausgerichteten Schneidkantengeometrien eines Zerspanwerkzeuges, insbesondere einer Wendeschneidplatte, insbesondere zur Durchführung des vorgenannten Verfahrens.

Aus der Praxis sind derartige Vorrichtungen bekannt, die bei Messaufgaben an kleinen Profilgeometrien, z. B. bei der Bestimmung des Verrundungsradius der Schneide von Zerspanwerkzeugen, eingesetzt werden.

Wie bereits eingangs ausgeführt, erfolgt dabei die Bestimmung der Profilgeometrie bzw. des Verrundungsradius üblicherweise im Tastschnittverfahren, bei dem die Profilgeometrie mit einer Tastnadel abgefahren und die Nadelauslenkung in ein elektrisches Signal umgesetzt wird. Dann wird das elektrische Signal ausgedruckt oder ausgeplottet und die Größe des Verrundungsradius mittels einer Schablone mit verschiedenen Radiengrößen ermittelt. Dies erfolgt meistens mittels manueller Überprüfung, welcher Radius mit dem gemessenen Profil deckungsgleich ist.

Nachteilig hierbei ist, dass es beim Tastschnittverfahren leicht zu Beschädigungen der Tastnadel kommen kann, was Verfälschungen des Messergebnisses verursacht. Zudem ist die Ausrichtung der Probe sehr aufwändig und die Bestimmung des Rundungsradius durch Schablonen umständlich und zeitintensiv. Letztendlich lässt sich das Tastschnittverfahren kaum automatisieren und eine Messung in der Maschine bei montiertem Zerspanungswerkzeug ist ebenfalls kaum möglich.

Aufgabe der Erfindung ist es, die vorgenannten Nachteile zu vermeiden und eine Vorrichtung anzugeben, mit der in einfacher und sicherer Art und Weise eine genaue Bestimmung der Schneidkantengeometrie eines Zerspanwerkzeuges ohne Beeinträchtigung des vermessenen Objekts möglich ist.

Diese Aufgabe wird gelöst durch eine Vorrichtung zur Messung von kleinen, in einem Winkel zur Schneidkantenlängserstreckung ausgerichteten Schneidkantengeometrien eines Zerspanwerkzeuges, insbesondere einer Wendeschneidplatte, insbesondere zur Durchführung des eingangs genannten Verfahrens, wobei ein Linienlaser, eine Bilderfassung sowie eine Auswerteeinrichtung vorgesehen sind,
der Linienlaser so ausgerichtet ist, dass er mit seinem streifenförmigen Laserstrahl auf den zu messenden Bereich der Schneidkantengeometrie auftrifft,
der Laserstrahl in seiner Ausrichtung durch die Laserstrahlbreite und die Laserstrahllängserstreckung charakterisiert ist,
die Bilderfassung zur Erfassung des durch den Bereich der zu messenden Schneidkantengeometrie diffus reflektierten Lichts ausgerichtet, die zur Auswertung der entsprechenden Bildsignale durch die Auswerteeinrichtung mit dieser verbunden ist,
die Laserstrahlbreite in einem ersten Winkel α zur Schneidkantenlängserstreckung ausgerichtet ist,
die Laserstrahllängserstreckung in einem zweiten, weder parallelen noch orthogonalen Winkel β zur Schneidkantenlängserstreckung ausgerichtet ist und
die relative Ausrichtung von Linienlaser und Bilderfassung zumindest bekannt ist und zur Berücksichtigung bei der Auswertung der erfassten Bildsignale in die Auswerteeinrichtung eingespeist ist. Hierdurch ist ein berührungsloses Vermessen der Profilgeometrien möglich, so dass Beschädigungen der Schneidkante ausgeschlossen sind und auch kein das Messergebnis eventuell verfälschender Verschleiß, z. B. einer Tastnadel oder dergleichen, eintreten kann.

Vorzugsweise kann die relative Ausrichtung von Linienlaser mit Bilderfassung derart vorgesehen sein, dass die Bilderfassung ausschließlich durch die Profilgeometrie diffus reflektiertes Licht erfasst, so dass nicht nur ein Lichtpunkt als Reflektion des gerichtet reflektierten Lichtes erfasst wird, was keine Aussage über die Profilgeometrie ermöglichen würde.

Dabei kann die Bilderfassung in der durch die Schneidkantenlängserstreckung und die Linienlaserlängserstreckung aufgespannte Ebene in orthogonaler Richtung zur Schneidkantenlängserstreckung erfolgen, so dass das Abbild der Laserprojektion auf der Schneidkante verzerrungsfrei von der insbesondere als CCD-Kamera ausgebildeten Bilderfassung aufgenommen werden kann.

Der Winkel β kann erfindungsgemäß zwischen 30° und 60°, insbesondere 45° betragen, so dass die zu kompensierenden Verzerrungen der Projektion aufgrund der schrägen Ausrichtung der Laserprojektion in Bezug auf die Schneidkante relativ gering ausfallen und einfach kompensiert werden können.

Vorteilhafterweise kann die Position des Linienlasers zur Einstellung seiner Fokuslage in Richtung der Achse seiner Längserstreckung, insbesondere automatisch veränderbar sein, und es kann weiterhin unabhängig hiervon auch die Position der Bilderfassung zur Einstellung ihrer Fokuslage in Richtung der Erfassungsrichtung, insbesondere automatisch veränderbar sein.

Bei einer bevorzugten Ausführungsform der Erfindung kann eine insbesondere in ihrer Position und/oder Ausrichtung veränderbare Halterung für das Zerspanwerkzeug vorgesehen sein, so dass zum einen die Position des Zerspanwerkzeuges in Abhängigkeit von seinen geometrischen Abmessungen auf den Schnittpunkt von Linienlaser und Bilderfassung abstimmbar ist und zum anderen auch durch entsprechende Verlagerung verschiedene Bereiche der Schneidkante bzw. der Schneidkantenverlauf erfassbar ist.

Vorteilhafterweise kann die Vorrichtung in eine Werkzeugmaschine mit zumindest einem Zerspanwerkzeug integriert sein, so dass das Zerspanwerkzeug bzw. eine Vielzahl entsprechender Werkzeuge direkt in der Werkzeugmaschine und insbesondere in montiertem Zustand überprüfbar ist bzw. sind.

Zur Erfassung von Zerspanwerkzeugen mit nicht diffus reflektierenden Oberflächen kann eine Einrichtung zur Erzielung einer Oberflächenanpassung durch Aufbringen einer diffus reflektierenden, sehr dünnen Schicht vorgesehen sein, wobei die Einrichtung zur Aufbringung einer Lackierung oder einer anderen, insbesondere rückstands- und beschädigungsfrei entfernbaren Beschichtung oder als eine Kühleinheit, insbesondere als ein Peltierelement oder dergleichen, ausgebildet sein kann. Auch kann die Kühleinheit als ein Element zur Kühlung durch Beaufschlagung mit einem niedertemperierten gasförmigen Medium ausgebildet sein.

Im Folgenden wird ein in der Zeichnung dargestelltes Ausführungsbeispiel der Erfindung erläutert. Es zeigen:
- Fig. 1: eine perspektivische schematische Darstellung einer erfindungsgemäßen Vorrichtung,
- Fig. 2, 3: Erläuterungsskizzen zum erfindungsgemäßen Messverfahren.

In allen Figuren werden für gleiche bzw. gleichartige Bauteile übereinstimmende Bezugszeichen verwendet.

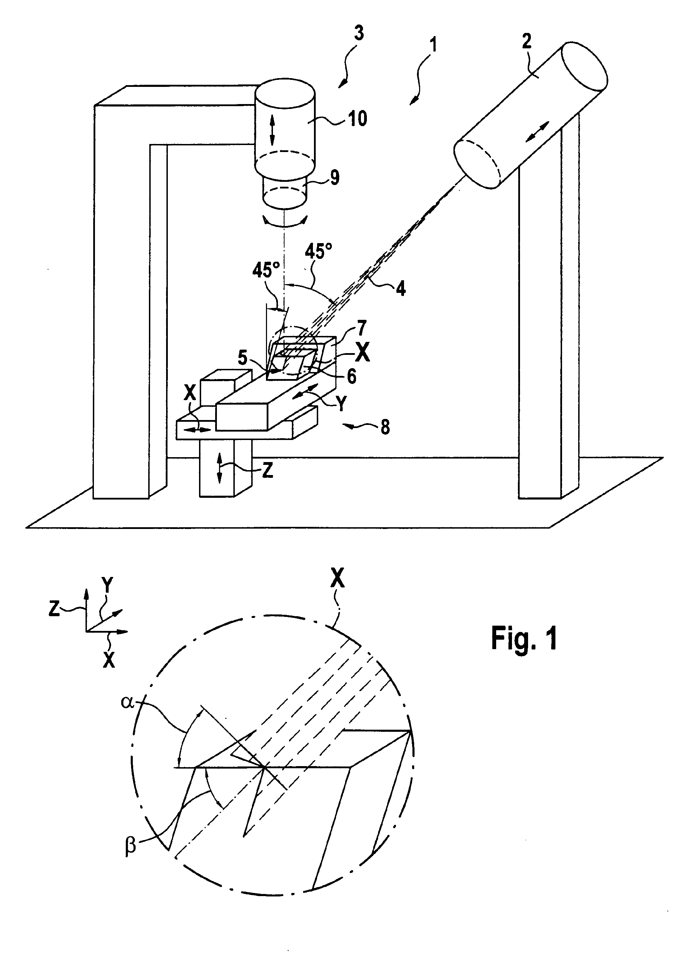

Fig. 1 zeigt eine Vorrichtung 1 zur Messung von kleinen Schneidkantengeometrien eines Zerspanwerkzeuges 6. Dabei ist die zu vermessende Schneidkantengeometrie in einem Winkel zur Schneidkantenlängserstreckung des Zerspanwerkzeuges ausgerichtet.

Die Vorrichtung 1 weist dabei einen Linienlaser 2, eine Bilderfassung 3 sowie eine in der Zeichnung nicht dargestellte Auswerteeinrichtung auf. Dabei ist der Linienlaser 1 so ausgerichtet ist, dass er mit seinem streifenförmigen Laserstrahl 4 auf den zu messenden Bereich 5 der Schneidkantengeometrie auftrifft.

Der Laserstrahl 4 ist in seiner Ausrichtung durch die Laserstrahlbreite und die Laserstrahllängserstreckung charakterisiert und die Bilderfassung 3 ist zur Erfassung des durch den Bereich 5 der zu messenden Schneidkantengeometrie diffus reflektierten Lichts des Laserstrahls 4 ausgerichtet und mit der Auswerteeinrichtung zur Auswertung der entsprechenden erfassten Bildsignale verbunden.

Erfindungsgemäß ist die Laserstrahlbreite in einem ersten Winkel α zur Schneidkantenlängserstreckung ausgerichtet und die Laserstrahllängserstreckung in einem zweiten, weder parallelen noch orthogonalen Winkel β zur Schneidkantenlängserstreckung ausgerichtet.

Weiterhin ist die relative Ausrichtung von Linienlaser und Bilderfassung zumindest bekannt und diese relative Ausrichtung ist zur Berücksichtigung bei der Auswertung der erfassten Bildsignale in die Auswerteeinrichtung eingespeist.

Wie aus Fig. 1 ersichtlich ist das Zerspanwerkzeug 6 auf einem insbesondere magnetischen Probenhalter 7 angeordnet, der wiederum an einer insbesondere in X-, Y- und Z-Richtung verfahrbaren Positioniereinrichtung 8 angeordnet ist.

Sowohl die Position des Linienlasers 2 als auch die Position der Bilderfassung 3 sind jeweils entlang ihrer Ausrichtung in Längsrichtung insbesondere automatisch veränderbar, um somit die Focuslage des Laserstrahls 4 bzw. der Bilderfassung 3 einstellen zu können. Die Focuseinstellung der Bilderfassung 3 kann dabei auch durch Verstellung des Objektivs 9 der CCD-Kamera 10 erfolgen.

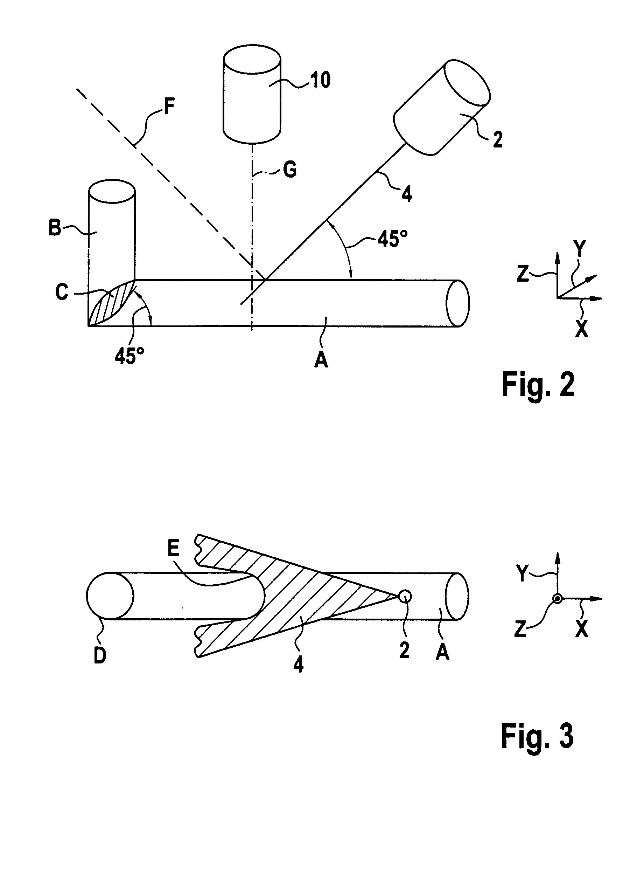

Die Figuren 2 und 3 verdeutlichen das Messprinzip des erfindungsgemäßen Verfahrens und der erfindungsgemäßen Vorrichtung. Fig. 2 zeigt zwei zylindrische Körper A und B, die unter einem Winkel von 45° zusammengesetzt sind. Die Schnittfläche C entspricht bei Betrachtung in Z-Richtung einem Kreis D, wie aus Fig. 3 ersichtlich. Auf die Projektion der Ebene des Laserstrahls 4 übertragen erfasst die CCD-Kamera 10 bei entsprechend orthogonal vorgesehener Ausrichtung eine kreisbogenförmige Projektion E des Laserstrahls 4.

Wie aus Fig. 2 hervorgeht, wird bei einer derartigen Anordnung durch die CCD-Kamera 10 nur diffus reflektiertes Licht erfasst, wohingegen gespiegeltes Licht F nicht in die Bildachse G gerät.

## Patentansprüche

1. Verfahren zum Messen von kleinen, in einem Winkel zur Schneidkantenlängserstreckung ausgerichteten Schneidkantengeometrien eines Zerspanwerkzeuges (6), insbesondere einer Wendeschneidplatte, **dadurch gekennzeichnet, dass** die Messung mittels eines Linienlasers (2), einer Bilderfassung (3) sowie einer Auswerteeinrichtung erfolgt, wobei der Linienlaser (2) mit seinem streifenförmigen Laserstrahl (4) auf den zu messenden Bereich (5) der Schneidkantengeometrie gerichtet ist und auf diesen Bereich (5) auftrifft,
der Laserstrahl (4) in seiner Ausrichtung durch die Laserstrahlbreite und die Laserstrahllängserstreckung charakterisiert ist,
die Bilderfassung (3) das durch den Bereich (5) der zu messenden Schneidkantengeometrie diffus reflektierte Licht (F) erfasst und die entsprechenden Bildsignale an die Auswerteeinrichtung zur Auswertung weiterleitet,
die Laserstrahlbreite in einem ersten Winkel α zur Schneidkantenlängserstreckung ausgerichtet ist,
die Laserstrahllängserstreckung in einem zweiten, weder parallelen noch orthogonalen Winkel β zur Schneidkantenlängserstreckung ausgerichtet ist und
die relative Ausrichtung von Linienlaser (2) und Bilderfassung (3) zumindest bekannt ist und diese relative Ausrichtung von der Auswerteeinrichtung bei der Auswertung der erfassten Bildsignale berücksichtigt wird.

2. Verfahren nach Anspruch 1 , **dadurch gekennzeichnet, dass** die relative Ausrichtung von Linienlaser (2) und Bilderfassung (3) zueinander derart vorgesehen ist, dass die Bilderfassung (3) ausschließlich durch die Profilgeometrie diffus reflektiertes Licht (F) erfasst.

3. Verfahren nach Anspruch 1 oder 2, **dadurch gekennzeichnet, dass** der Winkel β zwischen 30° und 60°, insbesondere 45° beträgt.

4. Verfahren nach einem der Ansprüche 1 bis 3, **dadurch gekennzeichnet, dass** die Auswertung der erfassten Bildsignale durch Überlagerung und Vergleich mit vorbekannten Hilfsgeometrien erfolgt.

5. Verfahren nach einem der Ansprüche 1 bis 4, **dadurch gekennzeichnet, dass** zur Erfassung von Zerspanwerkzeugen (6) mit nicht diffus reflektierenden Oberflächen eine Oberflächenanpassung durch Aufbringen einer diffus reflektierenden, sehr dünnen Schicht erfolgt.

6. Verfahren nach Anspruch 5, **dadurch gekennzeichnet, dass** die Oberflächenanpassung durch das Aufbringen einer Lackierung oder einer anderen, insbesondere rückstandsund beschädigungsfrei entfernbaren Beschichtung erfolgt.

7. Verfahren nach Anspruch 5, **dadurch gekennzeichnet, dass** die Oberflächenanpassung durch Verursachen einer Kondensatschicht mittels gezielter Kühlung des Zerspanwerkzeuges erfolgt.

8. Vorrichtung (1) zur Messung von kleinen, in einem Winkel zur Schneidkantenlängserstreckung ausgerichteten Schneidkantengeometrien eines Zerspanwerkzeuges (6), insbesondere einer Wendeschneidplatte, insbesondere zur Durchführung des Verfahrens nach einem der Ansprüche 1 bis 7, **dadurch gekennzeichnet, dass** ein Linienlaser (2), eine Bilderfassung (3) sowie eine Auswerteeinrichtung vorgesehen sind, wobei der Linienlaser (2) so ausgerichtet ist, dass er mit seinem streifenförmigen Laserstrahl (4) auf den zu messenden Bereich (5) der Schneidkantengeometrie auftrifft,
der Laserstrahl (4) in seiner Ausrichtung durch die Laserstrahlbreite und die Laserstrahllängserstreckung charakterisiert ist,
die Bilderfassung (3) zur Erfassung des durch den Bereich (5) der zu messenden Schneidkantengeometrie diffus reflektierten Lichts (F) ausgerichtet, die zur Auswertung der entsprechenden Bildsignale durch die Auswerteeinrichtung mit dieser verbunden ist,
die Laserstrahlbreite in einem ersten Winkel α zur Schneidkantenlängserstreckung ausgerichtet ist,
die Laserstrahllängserstreckung in einem zweiten, weder parallelen noch orthogonalen Winkel β zur Schneidkantenlängserstreckung ausgerichtet ist und
die relative Ausrichtung von Linienlaser (2) und Bilderfassung (3) zumindest bekannt ist und zur Berücksichtigung bei der Auswertung der erfassten Bildsignale in die Auswerteeinrichtung eingespeist ist.

9. Vorrichtung (1) nach Anspruch 8 , **dadurch gekennzeichnet, dass** die relative Ausrichtung von Linienlaser (2) und Bilderfassung (3) zueinander derart vorgesehen ist, dass die Bilderfassung (3) ausschließlich durch die Profilgeometrie diffus reflektiertes Licht (F) erfasst.

10. Vorrichtung (1) nach Anspruch 8 oder 9, **dadurch gekennzeichnet, dass** der Winkel β zwischen 30° und 60°, insbesondere 45° beträgt.

11. Vorrichtung (1) nach einem der Ansprüche 8 bis 11, **dadurch gekennzeichnet, dass** die Position des Linienlasers (2) zur Einstellung seiner Fokuslage in Richtung der Achse seiner Längserstreckung, insbesondere automatisch veränderbar ist.

12. Vorrichtung (1) nach einem der Ansprüche 8 bis 11, **dadurch gekennzeichnet, dass** die Position der Bilderfassung (3) zur Einstellung ihrer Fokuslage in Richtung der Erfassungsrichtung, insbesondere automatisch veränderbar ist.

13. Vorrichtung (1) nach einem der Ansprüche 8 bis 12, **dadurch gekennzeichnet, dass** eine insbesondere in ihrer Position und/oder Ausrichtung veränderbare Halterung für das Zerspanwerkzeug (6) vorgesehen ist.

14. Vorrichtung (1) nach einem der Ansprüche 8 bis 13, **dadurch gekennzeichnet, dass** die Vorrichtung (1) in eine Werkzeugmaschine mit zumindest einem Zerspanwerkzeug (6) integriert ist.

15. Vorrichtung (1) nach einem der Ansprüche 8 bis 14, **dadurch gekennzeichnet, dass** zur Erfassung von Zerspanwerkzeugen (6) mit nicht diffus reflektierenden Oberflächen eine Einrichtung zur Erzielung einer Oberflächenanpassung durch Aufbringen einer diffus reflektierenden, sehr dünnen Schicht vorgesehen ist.

16. Vorrichtung (1) nach Anspruch 15, **dadurch gekennzeichnet, dass** die Einrichtung zur Aufbringung einer Lackierung oder einer anderen, insbesondere rückstandsund beschädigungsfrei entfernbaren Beschichtung ausgebildet ist.

17. Vorrichtung (1) nach Anspruch 15, **dadurch gekennzeichnet, dass** die Einrichtung als eine Kühleinheit, insbesondere als ein Peltierelement oder dergleichen ausgebildet ist.
